# EUROPEAN PATENT APPLICATION

(11) **EP 4 718 105 A1**
(43) Date of publication of application: **01.04.2026**
(21) Application number: 25199285.5
(22) Date of filing: 01.09.2025
(51) Int. Cl.: G01S 1/00, G01S 13/86, G01S 19/20, G08G 5/25, G08G 5/72, G01S 13/93, G08G 5/21

(54) **DETERMINING A POSITION AND AN INTEGRITY OF THE POSITION OF A VEHICLE AND AN INTEGRITY OF THE POSITION OF NEIGHBORING VEHICLES USING RADAR AND ADS-B DATA**

(30) Priority: 25.09.2024 IN 202411072368; 06.01.2025 US 202519010748
(71) Applicant: Honeywell International Inc., Charlotte, NC 28202 (US)
(72) Inventor: KUMAR, Perumal, Charlotte, 28202 (US); LENKA, Sanjay, Charlotte, 28202 (US); THOMAS, Vinu, Charlotte, 28202 (US)
(74) Representative: Haseltine Lake Kempner LLP

(57) **Abstract**

A method for determining a position of a vehicle-of-interest is provided. The method includes: receiving data including position, velocity, heading and integrity that is broadcast from an ADS-B system from at least two neighboring vehicles in the vicinity of the vehicle-of-interest; determining a distance to, and a direction of travel of, each of the at least two neighboring vehicles using radar on the vehicle-of-interest; receiving a current path of the vehicle-of-interest; calculating a current position and integrity of the vehicle-of-interest based on (1) the data from the at least two neighboring vehicles, (2) the distance to, and direction of travel of, the at least two neighboring vehicles, and (3) the current path of the vehicle-of-interest; checking the integrity of the position received in the data from the at least two neighboring vehicles; and broadcasting a message about the integrity of the position received.

## Description

### CROSS-REFERENCE TO RELATED APPLICATIONS

This application claims benefit of Indian Provisional Application No. 202411072368 filed on September 25, 2024, and titled "DETERMINING A POSITION AND AN INTEGRITY OF THE POSITION OF A VEHICLE AND AN INTEGRITY OF THE POSITION OF NEIGHBORING VEHICLES USING RADAR AND ADS-B DATA", the contents of which are incorporated herein in their entirety.

### BACKGROUND

Currently, position data for navigation of vehicles, such as aircraft, automobiles, and watercraft, is commonly determined with an Inertial Navigation Systems (INS). The INS has motion sensors, rotation sensors and a computer to continuously calculate by dead reckoning the position, the orientation, and the velocity of a moving object (e.g., a vehicle). Unfortunately, the accuracy of INS sensors drift (degrade) over long distances and durations. Initially the INS computes the position accurately and as time elapses the position accuracy degrades considerably. To improve the accuracy of the INS, it is calibrated periodically using data from a Global Navigation Satellite System (GNSS).

Unfortunately, outages in the GNSS or spoofed GNSS signals are becoming a common problem, referred to generically as "GNSS-denied," and can result in the incorrect annunciation of actual GNSS receiver position outputs for a vehicle, thereby resulting in potential safety hazards. Thus, there is a need in the art for an alternative system or method to provide accurate position data to calibrate an INS when operating with GNSS or without GNSS (GNSS-denied).

### SUMMARY

A method for determining a position of a vehicle-of-interest is provided. The method includes: receiving data including position, velocity, heading and integrity that is broadcast from an ADS-B system from at least two neighboring vehicles in the vicinity of the vehicle-of-interest; determining a distance to, and a direction of travel of, each of the at least two neighboring vehicles using radar on the vehicle-of-interest; receiving a current path of the vehicle-of-interest; calculating a current position and integrity of the vehicle-of-interest based on (1) the data from the at least two neighboring vehicles, (2) the distance to, and direction of travel of, the at least two neighboring vehicles, and (3) the current path of the vehicle-of-interest; checking the integrity of the position received in the data from the at least two neighboring vehicles; and broadcasting a message about the integrity of the position received in the data from the at least two neighboring vehicles

### BRIEF DESCRIPTION OF THE DRAWINGS

Embodiments of the present invention can be more easily understood and further advantages and uses thereof more readily apparent, when considered in view of the description of the preferred embodiments and the following figures in which:
FIG. 1 illustrates one embodiment of an alternate process for a vehicle-of-interest to determine its own position based on received data broadcast, and radar reflections, from neighboring vehicles.
FIG. 2 is block diagram of one embodiment of a system for determining a position of a vehicle-of-interest based on received data from neighboring vehicles and information derived from radar reflections.
FIG. 3 is a flow chart of one embodiment of a process for determining a position of a vehicle-of-interest based on position-related data from neighboring vehicles and information derived from radar reflections.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

GNSS receivers provide outputs that are used for safe operation, e.g., navigation and landing, of vehicles. In one example, GNSS receiver outputs are consumed by multiple systems in aircraft including, but not limited to, Automatic Dependent Surveillance-Broadcast (ADS-B-Out), Enhanced Ground Proximity Warning System (EGPWS), Terrain Avoidance and Warning System (TAWS), transponders, Flight Controls and the like. Because GNSS signals may not be available in an area traversed by an aircraft due to spoofing or jamming (GNSS-denied), one embodiment of the present invention provides a system and method for calculating the position of the aircraft without data from the GNSS receiver of the aircraft. In this embodiment, the position is computed using data from an ADS-B receiver and a radar, such as a Digital Active Phased Array (DAPA) radar or equivalent, as described in more detail below. For pedagogical purposes, the embodiments described below are described in terms of DAPA radar, however embodiments of the present invention are not limited to use of DAPA radar. Other radar that enables a vehicle to determine distance to neighboring vehicles, along with their velocity and trajectory can also be used. The position derived from the solution using ADS-B and radar is consumed by those on-board systems, identified above, that typically rely on the GNSS position data for safe operation (e.g., navigation and landing). Thus, this embodiment, when used by an aircraft, enables Required Navigation Performance (RNP) criteria to be met in when GNSS is available (determine integrity of position derived from GNSS), as well as determining position and integrity in GNSS-denied environments resulting in improvements in operational safety. Further, this embodiment also enables determining the integrity of data in ADS-B message from neighboring vehicles.

Although one embodiment of the present invention provides an alternative system for determining the position of an aircraft, the teachings of the present invention are not intended to be limited to use by aircraft. Rather, the teachings are also applicable for determining the position of other types of vehicles when GNSS signals are not present including vehicles such as helicopters, unmanned aerial vehicles (UAV), Urban Air Mobility (UAM) vehicles, drones and other land-based vehicles or watercraft.

### Aircraft Embodiment

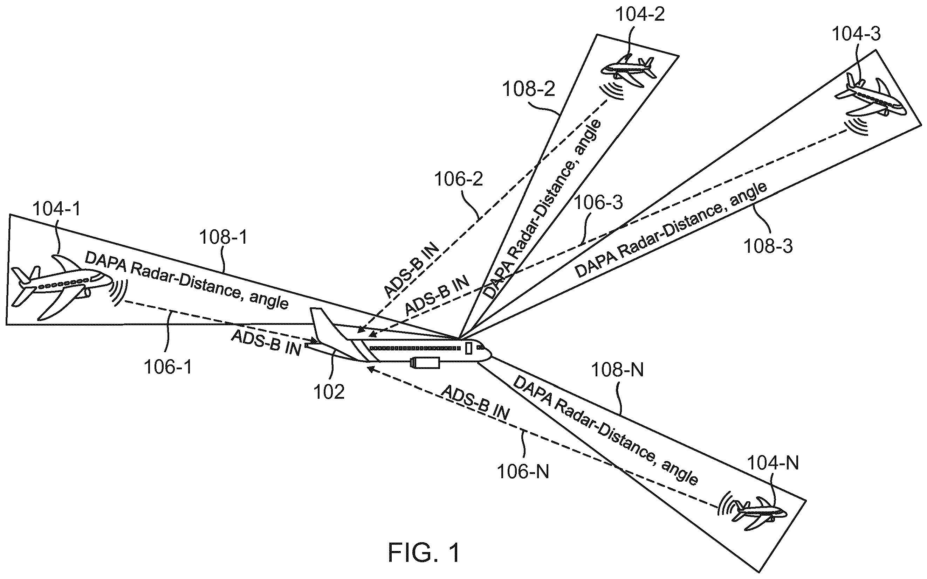

FIG. 1 illustrates one embodiment of an alternate process for a vehicle-of-interest 102 to determine its own position (latitude/longitude/altitude or other appropriate representation of position) based on data broadcast, and radar reflections, from neighboring vehicles 104-1 to 104-N (e.g., at least two other vehicles in the vicinity). Specifically, vehicle-of-interest 102 receives broadcast data 106-1 to 106-N from neighboring vehicles 104-1 to 104-N, respectively, in the vicinity of vehicle-of- interest 102. In one embodiment, broadcast data 106-1 to 106-N is transmitted through an Automatic Dependent Surveillance-Broadcast (ADS-B) system. Advantageously, ADS-B systems are installed on existing aircraft because of mandates from regulatory agencies and thus will be available for use in this alternate process. The ADS-B data, represented by broadcast data 106-1 to 106-N, includes, for example:
Flight Identification (flight number or call sign)
ICAO 24-bit Aircraft Address (globally unique airframe code)
Position (latitude/longitude)
Barometric and Geometric Altitudes
Position integrity/accuracy (GPS horizontal protection limit)
Vertical Rate (rate of climb/descent)
Track Angle and Ground Speed (velocity)
Emergency indication (when emergency code selected)
Special position identification (when IDENT selected)

Thus, broadcast data 106-1 to 106-N provides the positions of neighboring vehicles 104-1 to 104-N in the vicinity of the vehicle-of-interest 102 as well as the velocity/heading data over a period time. Broadcast data 106-1 to 106-N can be used to compute the position of vehicle-of-interest 102 using, for example triangulation or other appropriate calculation based on the data for the positions of other vehicles in the vicinity of the vehicle-of-interest.

Furthermore, vehicle-of-interest 102 also uses a DAPA radar to receive additional information regarding neighboring vehicles 104-1 to 104-N that is used in determining the position of vehicle-of- interest 102. Specifically, the DAPA Radar on vehicle-of-interest 102 transmits signals which are reflected by the neighboring vehicles 104-1 to 104-N. The return or reflected signals 108-1 to 108-N can be used by vehicle-of-interest 102 to compute the distance and angle of each respective one of neighboring vehicles 104-1 to 104-N relative to vehicle-of-interest 102 as well as the velocity/heading of neighboring vehicles 104-1 to 104-N.

In one embodiment, vehicle-of-interest 102 uses a function, of the form below, to calculate its position from the broadcast data 106-1 to 106-N and the reflected signals 108-1 to 108-N.

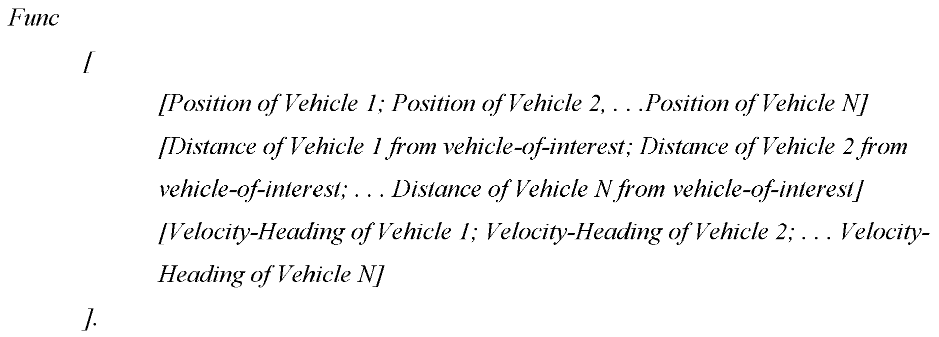

The final computed position data can be used by vehicle-of-interest 102 for various applications being the source for Airborne functions like:
Flight Controls
Flight Management System (FMS)
Landing Receivers (Similar to GLS/ SBAS LPV)
Traffic Collision Avoidance System (TCAS)
Mode-S transponder
Automatic Dependent Surveillance-Broadcast (ADS-B-Out)
Enhanced Ground Proximity Warning System (EGPWS)
Terrain Avoidance and Warning System (TAWS)

Furthermore, vehicle-of-interest 102 can use this calculated position to check the integrity of a position derived using signals from a Global Navigation Satellite System (GNSS). For purposes of this specification, "integrity" of data such as position is a measure of the trustworthiness or accuracy of the data. In this aspect, vehicle-of-interest 102 calculates a position using broadcast data 106-1 to 106-N and reflected signals 108-1 to 108-N (alternate position) and also calculates its position from the GNSS signals (GNSS position). Vehicle-of-interest 102 determines the integrity of the GNSS position by comparing the GNSS position with the alternate position. If the positions differ by more than a selected threshold, then the GNSS position is determined to have low integrity (e.g., due to spoofing or jamming). In some embodiments, the selected threshold varies with the phase of flight, e.g., during landing a higher degree of accuracy is desired. Determinations of thresholds, in some embodiments, are made based on RNP which, in part, defines how close vehicles can be to each other.

In addition to determining its position and the integrity of the position, vehicle-of-interest 102 can also determine the integrity of the ADS-B data received from the neighboring vehicles 104-1 to 104-N. When the position of vehicle-of- interest 102 is determined, vehicle-of-interest 102 uses its position and the distance and direction to each of the neighboring vehicles 104-1 to 104-N (derived from reflected signals 108-1 to 108-N from the DAPA radar), to calculate a position for each of the neighboring vehicles 104-1 to 104-N. If the calculated position of any one of the neighboring vehicles 104-1 to 104-N differs by a selected threshold (described above) from the position received in the ADS-B message for the respective one of the neighboring vehicles 104-1 to 104-N, then the integrity (accuracy) of the data in the ADS-B message is declared to be low. In various embodiments, the determination regarding the integrity of the data in the ADS-B messages received at vehicle-of-interest 102 is shared with the respective one of the neighboring vehicles 104-1 to 104-N that provided the inaccurate position data. In other embodiments, the determination is shared with a ground station or airline operations center. Further, the ADS-B data from the respective one of neighboring vehicles 104-1 to 104-N is excluded in any further calculations of the position of vehicle-of- interest 102. This helps improve the integrity of the position data calculated by vehicle-of-interest 102.

### Determining Position and Integrity

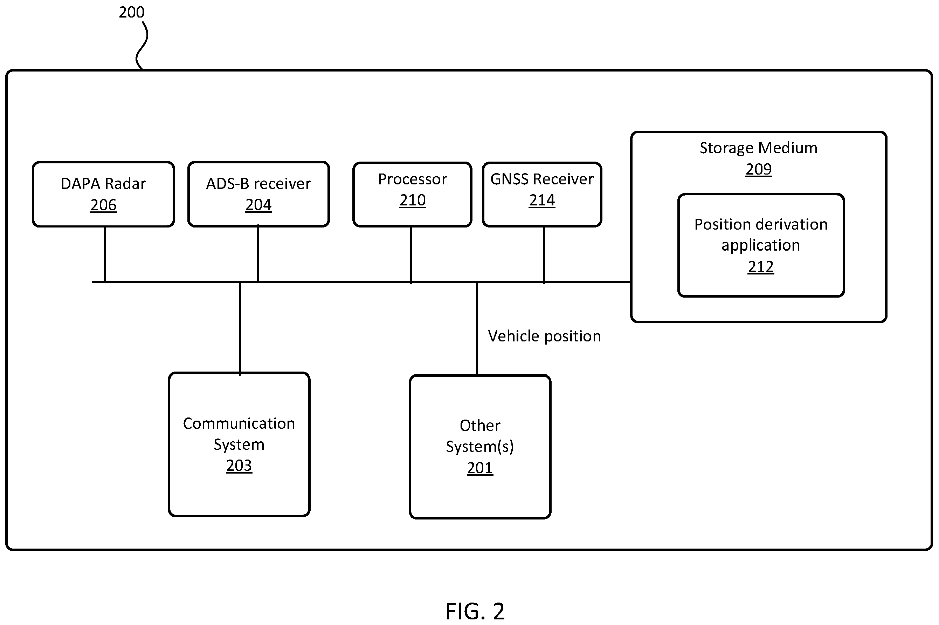

FIG. 2 is a block diagram of one embodiment of a system 200 for determining a position of a vehicle-of-interest based on position-related data from at least two neighboring vehicles and information derived from radar reflections. For example, system 200 may be implemented in vehicle-of-interest 102 of FIG. 1 and may use data from neighboring vehicles 104-1 to 104-N to determine a position of vehicle-of- interest 102. In other examples, system 200 is implemented in any appropriate vehicle-of-interest to determine the position of the vehicle-of-interest based on data from at least two other vehicles in the vicinity of the vehicle-of-interest. For pedagogical purposes, system 200 of FIG. 2 is described with reference to vehicle-of-interest 102 and neighboring vehicles 104-1 to 104-N of FIG. 1 although system 200 may be used with other vehicles.

System 200 includes ADS-B receiver 204 and DAPA radar 206 to gather data for vehicle-of-interest 102 from neighboring vehicles 104-1 to 104-N to enable system 200 to determine the position of vehicle-of- interest 102 and to check the integrity of positions determined using data from GNSS receiver 214. System 200 also includes storage medium 209 and processor 210. System 200 also includes position derivation application 212 stored as computer readable instructions on non-volatile storage medium 209. In operation, processor 210 executes the computer readable instructions of position derivation application 212 stored in storage medium 209 using data from DAPA radar 206 and ADS-B receiver 204 to calculate a position of vehicle-of-interest 102 This enables system 200 to determine the integrity of position determinations made using data from GNSS receiver 214. Further, when this position determination is determined to have low integrity, the position calculated by position derivation application 212 using data from DAPA radar 206 and ADS-B receiver 204 is used by other systems 201 on vehicle-of-interest 102. It is noted that processor 210, storage medium 209, and position derivation application 212 may be instantiated in a standalone system or, in other embodiments, the functions of processor 210, storage medium 209 and position derivation application 212 may be instantiated in Flight Management System (FMS) of vehicle-of- interest 102 such that the results from position derivation application 212 can be displayed in Cockpit displays seamlessly.

System 200 also includes other systems 201 and communication system 203. Other systems 201 are systems on vehicle-of-interest 102 that consume the position data derived using position derivation application 212. This includes, but it not limited to, Flight Controls, Flight Management System (FMS), Landing Receivers (Similar to GLS/ SBAS LPV),Traffic Collision Avoidance System (TCAS), Mode-S transponder, Automatic Dependent, Surveillance-Broadcast (ADS-B-Out), Enhanced Ground Proximity Warning System (EGPWS), and Terrain Avoidance and Warning System (TAWS). Further, communication system 203 enables system 200 to communicate (broadcast) with neighboring vehicles 104-1 to 104-N if system 200 determines that the ADS-B data of one of the neighboring vehicles 104-1 to 104-N is not accurate (low integrity). Additionally, communication system 203 also enables system 200 to communicate (broadcast) a message to alert a ground station or airline operations center that the ADS-B data for a particular vehicle has been determined to be inaccurate.

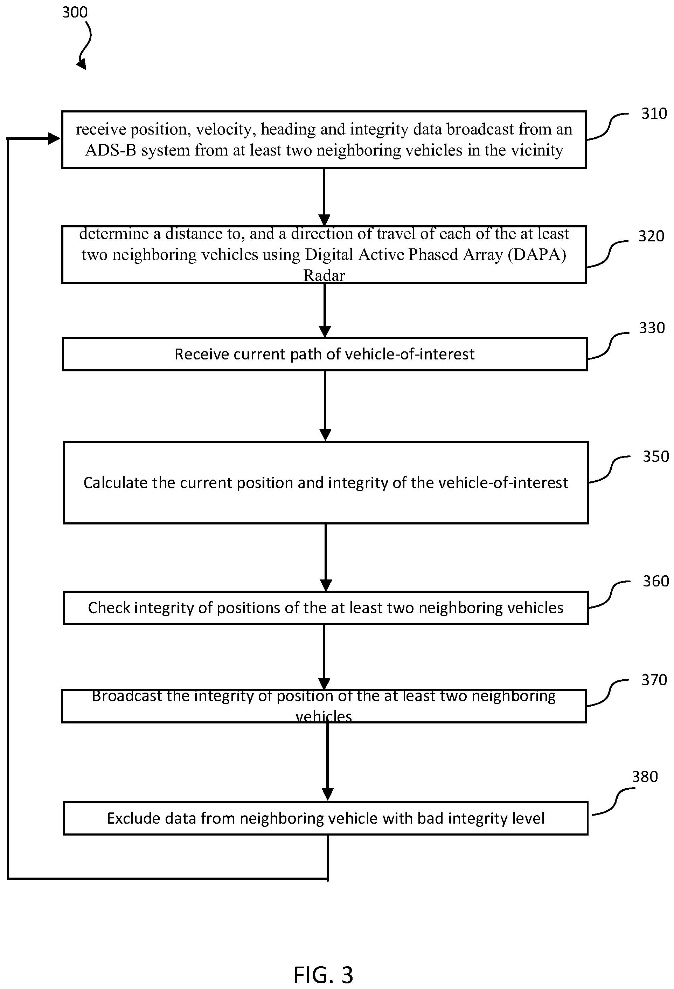

One example of a position derivation application 212 is shown in the flow chart of FIG. 3. FIG. 3 illustrates a process 300 for determining a position of a vehicle-of-interest based on data from at least two neighboring vehicles and information derived from radar reflections. Again, for pedagogical purposes, process 300 is described in view of vehicle-of- interest 102 and neighboring vehicles 104-1 to 104-N of FIG. 1 and system 200 of FIG. 2. Process 300, in other embodiments, is implemented on other systems in other vehicles as appropriate.

Process 300 begins at block 310 by vehicle-of-interest 102 receiving position, velocity, heading and integrity data at ADS-B receiver 204 broadcast from ADS-B systems from at least two neighboring vehicles 104-1 to 104-N in the vicinity of vehicle-of- interest 102. At block 320, process 300 determines a distance to, and a direction of travel of, each of the neighboring vehicles 104-1 to 104-N using DAPA radar 206. At block 330, process 300 receives the current path of vehicle-of-interest 102, if available. It is noted that process 300 is intended to enable vehicle-of-interest 102 to determine its current position if GNSS signals are jammed or spoofed. Process 300 is also intended to act as a check on a position calculated using data output by GNSS receiver 214. In the case of GNSS jamming or spoofing, the currently known position of vehicle-of-interest 102 as determined by data from the GNSS receiver at the time process 300 is initiated may have a low degree of accuracy (integrity). However, the use of the position of vehicle-of-interest 102 from a GNSS receiver just prior to GNSS failure/outage or the position from distance measuring equipment (DME) or even the output of an Inertial Navigation System (INS) may be beneficial as a starting point due to the nature of the forward exclusion algorithm used in process 300.

Processor 210 runs position derivation application 212. At block 350, position derivation application 212 calculates the current position and integrity of vehicle-of- interest 102. In one embodiment, position derivation application 212 calculates the position of vehicle-of- interest 102 based on the ADS-B data received at block 310, the information derived from the DAPA radar at block 320, and the current path data received at block 330, if available. In some embodiments, if no initialization position of vehicle-of-interest 102 is available, then position derivation application 212 uses distance/heading/velocity data derived from signals from DAPA radar 206 that reflect off from neighboring vehicles 104-1 to 104-N along with the position information from ADS-B data received from neighboring vehicles 104-1 to 104-N. With this data correlation from DAPA radar 206 and ADS-B receiver 204, the position of vehicle-of- interest 102 can be determined accurately. Advantageously, the distance between each of neighboring vehicles 104-1 to 104-B and vehicle-of-interest 102 can be computed more accurately using data from DAPA radar 206 and ADS-B receiver 204 and thus the position of vehicle-of- interest 102 can be arrived at with higher accuracy.

At block 350, position derivation application 212 also calculates the position of vehicle-of-interest 102 using data from GNSS receiver 214 (GNSS-derived position). Position derivation application 212 checks the integrity of the position derived from the data from GNSS receiver 214 by comparing this position with the position calculated based on data from ADS-B receiver 204 and DAPA radar 206. If the position derived from GNNS receiver 214 is determined to be within a selected threshold of the position calculated based on data from ADS-B receiver 204 and DAPA radar 206, then the position derived from GNSS receiver 214 is used by vehicle-of-interest 102 as its current position. If the GNSS-derived position is determined to be inaccurate, then the position derived using data from ADS-B receiver 204 and DAPA radar 206 is used for the position of vehicle-of-interest 102.

Process 300 also determines if the ADS-B data received from neighboring vehicles 104-1 to 104-N is accurate so that GNSS denied areas may be identified. In one embodiment, process 300 checks the integrity of the ADS-B data at block 360 by determining the position of each of neighboring vehicles 104-1 to 104-N using (1) the calculated position of vehicle-of- interest 102 from block 350 and (2) the distance to, and direction of travel of, neighboring vehicles 104-1 to 104-N determined at block 320 using data from DAPA radar 206. If the determined position for any of neighboring vehicles 104-1 to 104-N differs by more than a selected threshold from the position received at ADS-B receiver 204 of vehicle-of- interest 102 at block 310, then the integrity of the ADS-B data for that one of neighboring vehicles 104-1 to 104-N is determined to be inaccurate (low integrity). Otherwise, if the determined position for any of the neighboring vehicles 104-1 to 104-N matches the position received at block 310, e.g., differs by less than the selected threshold then the integrity of the ADS-B data for that one of neighboring vehicles 104-1 to 104-N is determined to be accurate (high integrity). Alternatively, process 300 may determine the integrity of the ADS-B data by determing the distance between the position received in the ADS-B data and the calculated position of vehicle-of- interest 102 and comparing that distance with the distance derived using the data from DAPA radar 206. If the distances differ by more than a selected threshold, then the ADS-B data has low integrity.

If position data (from ADS-B receiver 204) for more than one of neighboring vehicles 104-1 to 104-N matches (e.g., differs by less than a selected threshold) the distance information (derived from DAPA radar 206), then the position of vehicle-of- interest 102 has been computed accurately by position derivation application 212 and the positions of those ones of neighboring vehicles 104-1 to 104-N that match the ADS-B data are also accurate.

Process 300 also broadcasts the integrity of the ADS-B data of neighboring vehicles 104-1 to 104-N at block 370. In one embodiment, the integrity of the ADS-B data is broadcast to the respective neighboring vehicles 104-1 to 104-N. Additionally, in some embodiments, the integrity of the ADS-B data is broadcast to a ground station or airline operations center to alert them to the data indicating a possible GNSS-denied region.

When low integrity data is detected from one of neighboring vehicles 104-1 to 104-N, process 300 excludes data from that one of the neighboring vehicles 104-1 to 104-N at block 380.

Process returns to block 310 to iteratively calculate the position of vehicle-of- interest 102 based on ADS-B data from neighboring vehicles 104-1 to 104-N as well as data from DAPA radar 206. As vehicle-of-interest 102 repeats process 300, the accuracy of the position generated by process 300 improves. First, process 300 removes data sources with low integrity at block 380, e.g., ADS-B data from any of neighboring vehicles 104-1 to 104-N that are transmitting inaccurate position data. Additionally, process 300 relies on DAPA radar, which is an inherently more accurate data source, in calculating the position of vehicle-of- interest 102. Further, by iteratively calculating position of vehicle-of- interest 102, process 300 is able to track the position of vehicle-of- interest 102 and verify that the position output from process 300 stays accurate (high integrity) over time.

The methods and techniques described here may be implemented in digital electronic circuitry, or with a programmable processor (for example, a special-purpose processor or a general-purpose processor such as a computer) firmware, software, or in combinations of them. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instructions to, a data storage system, at least one input device, and at least one output device. Generally, a processor will receive instructions and data from a read-only memory and/or a random access memory or other non-transitory computer readable medium. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and DVD disks. Any of the foregoing may be supplemented by, or incorporated in, specially-designed application-specific integrated circuits (ASICs) or Field Programmable Gate Arrays (FGPAs).

The embodiments of the present invention, described above, improve the technology for determining a position by enabling the determination of the position in a GNSS-denied region. Advantageously, the embodiments described use systems that are commonly available on various vehicles, including aircraft, in combination with a unique process to calculate the position of a vehicle-of-interest. These systems gather data on other vehicles in the vicinity of the vehicle-of-interest that can be used to calculate the position of vehicle-of- interest. These systems include a receiver that is configured to receive position data from the other vehicles in the vicinity of the vehicle-of-interest, and a radar that is configured to determine a distance to, and a direction of travel of, the other vehicles in the vicinity of the vehicle-of-interest. Armed with this data, embodiments of the present invention enable determination of the position of the vehicle-of-interest with a high degree of accuracy without the use of GNSS data. Thus, embodiments of the present invention improve the technology of determining the position of a vehicle by enabling vehicles to safely operate even in regions without access to GNSS data due to interference or intentional spoofing.

### EXAMPLE EMBODIMENTS

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

Example 1 includes a method for determining a position of a vehicle-of-interest, the method comprising: receiving data including position, velocity, heading and integrity that is broadcast from an ADS-B system from at least two neighboring vehicles in the vicinity of the vehicle-of-interest; determining a distance to, and a direction of travel of, each of the at least two neighboring vehicles using radar on the vehicle-of-interest; receiving a current path of the vehicle-of-interest; calculating a current position and integrity of the vehicle-of-interest based on (1) the data from the at least two neighboring vehicles, (2) the distance to, and direction of travel of, the at least two neighboring vehicles, and (3) the current path of the vehicle-of-interest; checking the integrity of the position received in the data from the at least two neighboring vehicles; and broadcasting a message about the integrity of the position received in the data from the at least two neighboring vehicles.

Example 2 includes the method of example 1, wherein checking the integrity of the position received in the data from the at least two neighboring vehicles includes, for each of the at least two neighboring vehicles:

deriving a position ("the derived position") of a respective one of the at least two neighboring vehicles based on the current position of the vehicle-of-interest and the distance to, and direction of travel of, the respective one of the at least two neighboring vehicles; and comparing the derived position with the position received from the respective one of the at least two neighboring vehicles.

Example 3 includes the method of example 2, wherein when the derived position and the position received from the respective one of the at least two neighboring vehicles differs by more than a selected threshold, declaring that the data that includes the position received from the respective one of the at least two neighboring vehicles has low integrity.

Example 4 includes the method of example 3, and further comprising excluding the data from one of the at least two neighboring vehicles for use in calculating the current position of the vehicle-of-interest when the data has low integrity.

Example 5 include the method of example 3, wherein broadcasting the message includes sending the message to a ground station or one of the at least two neighboring vehicles with the data that has low integrity.

Example 6 includes the method of any of examples 1-5, and further comprising: calculating a GNSS-derived position of the vehicle-of-interest using data from a GNSS receiver; and comparing the GNSS-derived position with the current position to determine the integrity of the GNSS-derived position.

Example 7 includes the method of example 6, and further providing the current position to one or more systems including flight controls, flight management system, landing receivers, enhanced ground proximity warning system (EGPWS), ADS-B out, traffic alert and collision avoidance system (TCAS), and Mode-S when the GNSS-derived position is determined to have low integrity.

Example 8 includes the method of any of examples 1-7, wherein calculating the current position and integrity of the vehicle-of-interest comprises, for N neighboring vehicles, applying a function defined by:

```
Func
       [
       [Position of Vehicle 1; Position of Vehicle 2, . . .Position of Vehicle N]
       [Distance of Vehicle 1 from vehicle-of-interest; Distance of Vehicle 2 from vehicle-of-
       interest; . . . Distance of Vehicle N from vehicle-of-interest]
       [Velocity-Heading of Vehicle 1; Velocity-Heading of Vehicle 2; . . . Velocity-Heading of
 Vehicle N]
       ].
```

Example 9 includes a system for determining a position of a vehicle-of-interest, the system comprising: an ADS-B receiver configured to receive data including position, velocity, heading and integrity that is broadcast from an ADS-B system from at least two neighboring vehicles in the vicinity of the vehicle-of-interest; a radar configured to determine a distance to, and a direction of travel of, each of the at least two neighboring vehicles; a storage medium configured to store a position derivation application; and a processor, in communication with the ADS-B receiver, the radar, and the storage medium, the processor configured to run the position derivation application, which, when executed by the processor causes the processor to execute the method including: receiving a current path of the vehicle-of-interest; calculating a current position and integrity of the vehicle-of-interest based on (1) the data from the at least two neighboring vehicles, (2) the distance to, and direction of travel of, the at least two neighboring vehicles, and (3) the current path of the vehicle-of-interest; checking the integrity of the position received in the data from the at least two neighboring vehicles; and broadcasting a message about the integrity of the position received in the data from the at least two neighboring vehicles.

Example 10 includes the system of example 9, wherein checking the integrity of the position received in the data from the at least two neighboring vehicles as executed by the processor includes, for each of the at least two neighboring vehicles: deriving a position ("the derived position") of a respective one of the at least two neighboring vehicles based on the current position of the vehicle-of-interest and the distance to, and direction of travel of, the respective one of the at least two neighboring vehicles; and comparing the derived position with the position received from the respective one of the at least two neighboring vehicles.

Example 11 includes the system of example 10, wherein when the derived position and the position received from the respective one of the at least two neighboring vehicles differ by more than a selected threshold, the method as executed by the processor includes declaring that the data that includes the position received from the respective one of the at least two neighboring vehicles has low integrity.

Example 12 includes the system of example 11, and the method executed by the processor further comprising excluding the data from one of the at least two neighboring vehicles for use in calculating the current position of the vehicle-of-interest when the data has low integrity.

Example 13 includes the system of example 11, wherein broadcasting the message as executed by the processor includes sending the message to a ground station or one of the at least two neighboring vehicles with the data that has low integrity.

Example 14 includes the system of example 11, wherein the radar comprises a Digital Active Phased Array Radar.

Example 15 includes the system of any of examples 9 to 14, and further including one or more systems including flight controls, flight management system, landing receivers, enhanced ground proximity warning system (EGPWS), ADS-B out, traffic alert and collision avoidance system (TCAS), and Mode-S that are configured to receive the current position from the processor.

Example 16 includes the system of any of examples 9 to 15, wherein calculating the current position and integrity of the vehicle-of-interest when executed by the processor comprises, for N neighboring vehicles, applying a function defined by:

```
 Func
       [
       [Position of Vehicle 1; Position of Vehicle 2, ...Position of Vehicle N]
       [Distance of Vehicle 1 from vehicle-of-interest; Distance of Vehicle 2 from vehicle-of-
       interest; . . . Distance of Vehicle N from vehicle-of-interest]
       [Velocity-Heading of Vehicle 1; Velocity-Heading of Vehicle 2; . . . Velocity-Heading of
 Vehicle N]
       ].
```

Example 17 includes a method for determining a position of a vehicle-of-interest, the method comprising: receiving broadcast data from an ADS-B system from at least two neighboring vehicles in the vicinity of the vehicle-of-interest; receiving radar reflections from the at least two neighboring vehicles using radar on the vehicle-of-interest; receiving a current path of the vehicle-of-interest; calculating a current position and integrity of the vehicle-of-interest based on the broadcast data from the at least two neighboring vehicles, the radar reflections from the at least two neighboring vehicles, and the current path of the vehicle-of-interest; checking the integrity of a position received in the broadcast data from the at least two neighboring vehicles; and broadcasting a message about the integrity of the position received in the broadcast data from the at least two neighboring vehicles.

Example 18 includes the method of example 17, wherein receiving broadcast data from an ADS-B system comprises receiving data including the position, velocity, heading and integrity from the at least two neighboring vehicles in the vicinity of the vehicle-of-interest.

Example 19 includes the method of example 17, wherein receiving radar reflections from the at least two neighboring vehicles comprising receiving radar reflections that enable determining a distance to, and a direction of travel of, each of the at least two neighboring vehicles.

Example 20 includes the method of example 17, wherein calculating the current position and integrity of the vehicle-of-interest comprises, for N neighboring vehicles, applying a function defined by:

```
 Func
       [
       [Position of Vehicle 1; Position of Vehicle 2, ...Position of Vehicle N]
       [Distance of Vehicle 1 from vehicle-of-interest; Distance of Vehicle 2 from vehicle-of-
       interest; . . . Distance of Vehicle N from vehicle-of-interest]
       [Velocity-Heading of Vehicle 1; Velocity-Heading of Vehicle 2; . . . Velocity-Heading of
 Vehicle N]
       ].
```

## Claims

1. A method (300) for determining a position of a vehicle-of-interest, the method comprising:
receiving data including position, velocity, heading and integrity that is broadcast from an ADS-B system from at least two neighboring vehicles in the vicinity of the vehicle-of-interest (310);
determining a distance to, and a direction of travel of, each of the at least two neighboring vehicles using radar on the vehicle-of-interest (320);
receiving a current path of the vehicle-of-interest (330);
calculating a current position and integrity of the vehicle-of-interest based on (1) the data from the at least two neighboring vehicles, (2) the distance to, and direction of travel of, the at least two neighboring vehicles, and (3) the current path of the vehicle-of-interest (350);
checking the integrity of the position received in the data from the at least two neighboring vehicles (360); and
broadcasting a message about the integrity of the position received in the data from the at least two neighboring vehicles (370).

2. The method of claim 1, wherein checking the integrity of the position received in the data from the at least two neighboring vehicles includes, for each of the at least two neighboring vehicles:
deriving a position ("the derived position") of a respective one of the at least two neighboring vehicles based on the current position of the vehicle-of-interest and the distance to, and direction of travel of, the respective one of the at least two neighboring vehicles; and
comparing the derived position with the position received from the respective one of the at least two neighboring vehicles.

3. The method of claim 2, wherein when the derived position and the position received from the respective one of the at least two neighboring vehicles differs by more than a selected threshold, declaring that the data that includes the position received from the respective one of the at least two neighboring vehicles has low integrity.

4. The method of claim 3, and further comprising excluding the data from one of the at least two neighboring vehicles for use in calculating the current position of the vehicle-of-interest when the data has low integrity (380).

5. The method of claim 1, and further comprising:
calculating a GNSS-derived position of the vehicle-of-interest using data from a GNSS receiver; and
comparing the GNSS-derived position with the current position to determine the integrity of the GNSS-derived position.

6. The method of claim 5, and further providing the current position to one or more systems including flight controls, flight management system, landing receivers, enhanced ground proximity warning system (EGPWS), ADS-B out, traffic alert and collision avoidance system (TCAS), and Mode-S when the GNSS-derived position is determined to have low integrity.

7. A system for determining a position of a vehicle-of-interest, the system comprising:
an ADS-B receiver (204) configured to receive data including position, velocity, heading and integrity that is broadcast from an ADS-B system from at least two neighboring vehicles in the vicinity of the vehicle-of-interest (310);
a radar (206) configured to determine a distance to, and a direction of travel of, each of the at least two neighboring vehicles (320);
a storage medium (209) configured to store a position derivation application; and
a processor (210), in communication with the ADS-B receiver, the radar, and the storage medium, the processor configured to run the position derivation application, which, when executed by the processor causes the processor to execute the method (300) including:
receiving a current path of the vehicle-of-interest (330);
calculating a current position and integrity of the vehicle-of-interest based on (1) the data from the at least two neighboring vehicles, (2) the distance to, and direction of travel of, the at least two neighboring vehicles, and (3) the current path of the vehicle-of-interest (350);
checking the integrity of the position received in the data from the at least two neighboring vehicles (360); and
broadcasting a message about the integrity of the position received in the data from the at least two neighboring vehicles (370).

8. The system of claim 7, wherein checking the integrity of the position received in the data from the at least two neighboring vehicles as executed by the processor includes, for each of the at least two neighboring vehicles:
deriving a position ("the derived position") of a respective one of the at least two neighboring vehicles based on the current position of the vehicle-of-interest and the distance to, and direction of travel of, the respective one of the at least two neighboring vehicles; and
comparing the derived position with the position received from the respective one of the at least two neighboring vehicles.

9. The system of claim 8, wherein when the derived position and the position received from the respective one of the at least two neighboring vehicles differ by more than a selected threshold, the method as executed by the processor includes declaring that the data that includes the position received from the respective one of the at least two neighboring vehicles has low integrity.

10. The system of claim 9, and the method executed by the processor further comprising excluding the data from one of the at least two neighboring vehicles for use in calculating the current position of the vehicle-of-interest when the data has low integrity (380).
